(19) Europäisches Patentamt
European Patent Office
Office européen des brevets

(11) **EP 3 663 330 A1**

(12) **EUROPEAN PATENT APPLICATION**
published in accordance with Art. 153(4) EPC

(43) Date of publication:
**10.06.2020 Bulletin 2020/24**

(21) Application number: **18841225.8**

(22) Date of filing: **30.07.2018**

(51) Int Cl.:
*C08H 7/00* (2011.01)    *C08L 97/00* (2006.01)

(86) International application number:
**PCT/JP2018/028406**

(87) International publication number:
**WO 2019/026825 (07.02.2019 Gazette 2019/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.07.2017   JP 2017147697**

(71) Applicant: **Toray Industries, Inc.**
**Tokyo 103-8666 (JP)**

(72) Inventors:
• **ARAI, Takahiro**
**Kamakura-shi**
**Kanagawa 248-8555 (JP)**

• **KURIHARA, Hiroyuki**
**Otsu-shi**
**Shiga 520-8558 (JP)**
• **FUNADA, Shigeyuki**
**Kamakura-shi**
**Kanagawa 248-8555 (JP)**
• **YAMADA, Katsushige**
**Kamakura-shi**
**Kanagawa 248-8555 (JP)**

(74) Representative: **Kador & Partner PartG mbB**
**Corneliusstraße 15**
**80469 München (DE)**

(54) **METHOD FOR PRODUCING LIGNIN**

(57)    It becomes possible to produce a lignin with a low softening point by bringing a lignin-containing biomass into contact with an alkaline aqueous solution to subject the biomass to an alkali treatment, and adjusting a temperature and a pH of the alkali-treated product thus obtained to 35°C or higher and pH 7 or lower, respectively, to precipitate a lignin.

**EP 3 663 330 A1**

**Description**

BACKGROUND OF THE INVENTION

Field of the Invention

The present invention relates to a method for producing a lignin with a low softening point from a lignin-containing biomass.

Background Art

Lignin exists in the largest amount next to cellulose on earth, and exists in most abundantly as a natural aromatic polymer. Applications thereof have been mainly industrially utilized from long ago, and utilization for functional foods, soil conditioners, additives to concretes, adsorption of heavy metals utilizing ion exchange functions and the like. The utilization of lignin that attracts attention now is addition to thermosetting resins such as phenol resins and thermoplastic resins such as polyamide-based resins. This can reduce the use of phenol resins and polyamide-based resins, and is useful for reduction in the amount of petroleum materials, thus leading to production of environment-conscious resins. In thermosetting resin molded articles obtained by adding particularly a herbaceous lignin among lignins, there has been confirmed functionalization, namely, improvement in various properties such as mechanical strength, heat resistance, and electrical insulation (Patent Document 1). When a lignin is added to a thermosetting resin or a thermoplastic resin, the resin is molded by heating and kneading, and softening of the lignin at the molding temperature becomes important for ascertaining the moldability. Thus, when addition to a resin is expected as an application of a lignin, the softening point of the lignin becomes an important index, and it is preferable to utilize a lignin with a softening point of 160°C or lower (Patent Document 2).

As a method for producing a lignin, there has been reported a method in which a black liquor isolated in a step of producing a pulp is treated using an ion exchange resin, and the precipitated lignin is obtained by solid-liquid separation, thereby producing a high-purity lignin (Patent Document 3). As a method for producing a lignin by degrading plants (e.g., herbaceous biomasses such as a bagasse, a rice straw, and a bamboo), there has been reported a treatment using subcritical water (Patent Document 4). However, in the treatment of a black liquor using an ion exchange resin, regeneration of the resin becomes a heavy burden on the production cost and the production efficiency. With respect to the treatment using subcritical water, since production of subcritical water requires a high thermal energy cost and high-pressure equipment, there is a burden on the production cost, and both treatments have a problem in practical application.

Prior Art Document

[Patent Document]

[Patent Document 1] JP 2012-82255 A
[Patent Document 2] JP 2014-193977 A
[Patent Document 3] JP 2012-214432 A
[Patent Document 4] JP 2011-57997 A

SUMMARY OF THE INVENTION

It is an object of the present invention to provide a method for simply producing a lignin with a low softening point.
The present inventors have found that a lignin with a low softening point can be obtained by treating a lignin-containing biomass with an alkaline aqueous solution and neutralizing the alkali-treated product thus obtained at a specific temperature, thus completing the present invention.
Specifically, the present invention encompasses the following (1) to (9):

(1) A method for producing a lignin, the method including:

(a) a step of obtaining an alkali-treated product by an alkali treatment in which a lignin-containing biomass is brought into contact with an alkaline aqueous solution; and
(b) a step of adjusting a temperature and a pH of the alkali-treated product to 35°C or higher and pH 7 or lower, respectively, to precipitate a lignin, and recovering the lignin.

(2) The method for producing a lignin according to (1), wherein, in the step (b), the temperature of the alkali-treated product is adjusted to 35°C or higher, and then the pH of the alkali-treated product is adjusted to 7 or lower under the temperature condition.

(3) The method for producing a lignin according to (1) or (2), wherein the lignin precipitated in the step (b) is recovered to the solid component side by solid-liquid separation.

(4) The method for producing a lignin according to (3), wherein the lignin recovered to the solid component side is dissolved in an organic solvent and recovered.

(5) The method for producing a lignin according to (3) or (4), wherein the solid-liquid separation uses a filter aid.

(6) The method for producing a lignin according to any one of (1) to (5), wherein the lignin-containing biomass is a bagasse, a rice straw, or a cassava pulp.

(7) The method for producing a lignin according to any one of (1) to (6), wherein the temperature condition of the alkali treatment in the step (a) is in a range of 60°C or higher and lower than 100°C.

(8) A lignin, having a softening point of 70°C or higher and 160°C or lower and a number average molecular weight of 5,000 or more and 30,000 or less.

(9) A resin composition, including the lignin according to (8).

According to the present invention, it is possible to provide a method for simply producing a lignin with a low softening point.

## DETAILED DESCRIPTION OF THE INVENTION

A lignin-containing biomass refers to a plant resource containing at least a lignin. Suitable examples of the lignin-containing biomass include a herbaceous biomass such as a bagasse, a switchgrass, a napier grass, Erianthus, a corn stover, a rice straw, a straw, an oil palm empty fruit bunch, and a cassava pulp; or a wood-based biomass such as a tree, a wood chip, and a waste building material; and further a biomass derived from an aquatic environment such as algae and seaweed, and a herbaceous biomass is more preferable, and a bagasse, a rice straw, and a cassava pulp is particularly preferable.

A shape of the lignin-containing biomass is not particularly limited, and it is preferable that the biomass is ground. A grinding means is not particularly limited, and grinding can be performed using a machine commonly used for coarse grinding of various materials such as a ball mill, a vibration mill, a cutter mill, a hammer mill, a Wiley mill, and a jet mill. This mechanical grinding may be either dry or wet, and dry grinding is preferable.

A moisture content of the lignin-containing biomass is not particularly limited. The moisture content of the lignin-containing biomass can be measured using an infrared moisture meter. Specifically, measurement is performed by the following method. First, the weight of a sample of a lignin-containing biomass to be measured is measured, and this is used as an initial value. Next, the sample of the lignin-containing biomass is kept at a temperature of 120°C, and moisture is evaporated until no weight change is observed. The weight after evaporation is measured, and this is used as a stable value (dry weight). A value obtained from the difference between the initial value and the stable value is regarded as a moisture content. The infrared moisture meter is not particularly limited, and, for example, FD-720 manufactured by Kett Electric Laboratory, etc., can be utilized.

The lignin-containing biomass contains celluloses and hemicelluloses in addition to lignins, and the lignins exist such that they cover polysaccharides such as celluloses and hemicelluloses. Therefore, in order to obtain a lignin from the lignin-containing biomass, a treatment for releasing a lignin from a cellulose and a hemicellulose is required, and the present invention is characterized by applying an alkali treatment step (step (a)).

The alkali treatment in the step (a) is a step of obtaining an alkali-treated product by bringing a lignin-containing biomass into contact with an alkaline aqueous solution in accordance with a general alkali treatment method used for the above treatment. A method for bringing a lignin-containing biomass into contact with an alkaline aqueous solution is not particularly limited, and examples thereof include a method for bringing into contact by spraying an alkaline aqueous solution on a lignin-containing biomass, or immersing or passing a lignin-containing biomass in/through an alkaline aqueous solution. At this time, stirring may be performed or the container may be rotated so that the lignin-containing biomass is sufficiently brought into contact with the alkaline aqueous solution.

Since the lignin released by the alkali treatment is eluted in the alkaline aqueous solution, in the step (a), solid-liquid separation may be performed after the alkali treatment, and the liquid fraction thus obtained may be used in the step (b) as an alkali-treated product. As a method for solid-liquid separation, the method exemplified in the description of the step (b) mentioned later is applied. When the lignin-containing biomass is passed through the alkaline aqueous solution, the solution after passing through may be used as an alkali-treated product.

The alkaline aqueous solution used in the alkali treatment is not particularly limited, and specifically examples thereof include an alkaline aqueous solution containing at least one selected from ammonia, alkali metal hydroxide, alkali metal oxide, alkaline earth metal oxide, alkali metal carbonate, alkaline earth metal carbonate, quaternary ammonium hydroxide and the like. The alkaline aqueous solution is preferably an alkaline aqueous solution containing at least one selected from alkali metal hydroxide, alkali metal oxide, alkaline earth metal oxide, alkali metal carbonate, alkaline earth metal carbonate and the like. Preferred alkali metal hydroxide includes sodium hydroxide, potassium hydroxide, and lithium hydroxide; preferred alkaline earth metal hydroxide includes magnesium hydroxide and calcium hydroxide; preferred alkali metal oxide includes sodium oxide and potassium oxide; preferred alkaline earth metal oxide includes magnesium oxide and calcium oxide; preferred alkali metal carbonate includes sodium carbonate, potassium carbonate, and lithium carbonate; and preferred alkaline earth metal carbonate includes magnesium carbonate and calcium carbonate.

The alkaline aqueous solution preferably does not contain a sulfur compound (e.g., a compound having a sulfur element such as sulfuric acid, sodium sulfate, and sodium sulfide). If a sulfur compound is contained, addition of a sulfur atom or mixing of a sulfur compound to/into a lignin to be recovered occurs, and when a resin composition is produced using a lignin obtained in the present invention, this may cause deterioration of the physical property of the resin composition produced or a foul odor during production of a resin composition.

As the alkaline aqueous solution, an aqueous solution with an alkali concentration of 0.15 M or less, preferably 0.05 to 0.15 M, and more preferably 0.075 to 0.15 M is used. When an alkaline aqueous solution with a higher concentration than 0.15 M is used, degradation and denaturation of a lignin excessively progress, and the lignin becomes a low-molecular weight water-soluble lignin, resulting in decrease in the recovery amount. When an alkaline aqueous solution with a lower concentration than 0.05 M is used, the efficiency of eluting a lignin from the lignin-containing biomass decreases, resulting in decrease in the recovery amount.

A pH of the alkaline aqueous solution is not particularly limited as long as the pH is higher than 7, and the pH is preferably 8 or higher, more preferably 9 or higher, and still more preferably 10 or higher. The upper limit of pH is not particularly limited, and it can be set as pH 13.5 or lower in terms of decreasing the amount of alkali used. A preferred pH range is 8 or higher and 13.5 or lower, more preferred pH range is 9 or higher and 13.5 or lower, and still more preferred pH range is 10 or higher and 13 or lower.

In the present invention, a weight ratio of the alkaline aqueous solution to the lignin-containing biomass is not particularly limited, and the following ratio is preferable based on a dry weight of the lignin-containing biomass. A preferred weight ratio is 100:1 to 2:1, 90:1 to 3:1, 50:1 to 5:1, 30:1 to 5:1, 25:1 to 7:1, 25:1 to 7:1, 25:1 to 5:1, and 20:1 to 5:1.

A treatment temperature in the alkali treatment is not particularly limited, and it is preferably 60°C or higher and lower than 100°C, more preferably 80°C or higher and 95°C or lower. When the alkali treatment is performed at a temperature of 100°C or higher, degradation and denaturation of a lignin excessively progress, and the proportion of a low-molecular weight water-soluble lignin becomes high, resulting in decrease in the recovery amount. In the case of bringing into contact with the alkaline aqueous solution at a temperature of lower than 60°C, the efficiency of eluting a lignin from the biomass decreases, resulting in decrease in the recovery amount.

A time during which the lignin-containing biomass is brought into contact with the alkaline aqueous solution in the alkali treatment is not limited, and it is preferably 1 hour or more to 24 hours or less, more preferably 1 hour or more and 6 hours or less, and still more preferably 1 hour or more and 3 hours or less. When the time during which the lignin-containing biomass is brought into contact with the alkaline aqueous solution is more than 24 hours, degradation and denaturation of a lignin excessively progress, and the lignin becomes a low-molecular weight water-soluble lignin, resulting in decrease in the recovery amount. When the time during which the lignin-containing biomass is brought into contact with the alkaline aqueous solution is 1 hour or less, the efficiency of eluting a lignin from the biomass decreases, resulting in decrease in the recovery amount.

A pH of the alkali-treated product obtained by the alkali treatment tends to decrease with an alkali treatment time. This is because when the alkali treatment proceeds, a component of a soluble lignin plays a role as a neutralizer, and it is possible to measure the progression state of the reaction based on this degree of decrease. A range of a pH particularly at the end of the alkali treatment can be appropriately adjusted based on the initial alkali concentration, etc., and, it is preferable to adjust the pH in a range of preferably, for example, 8 or higher and 12.5 or lower, 8 or higher and 12.5 or lower, more preferably 9 or higher and 12 or lower, and still more preferably 10 or higher and 12 or lower.

In the step (b) of recovering a lignin from the alkali-treated product obtained in the step (a), it is possible to adjust a temperature and a pH of the alkali-treated product to 35°C or higher and pH 7 or lower, respectively, to precipitate a lignin, thus obtaining a target lignin with a low softening point.

A range of a temperature kept of the alkali-treated product in the step (b) is preferably 35°C or higher and lower than 100°C, and more preferably 40°C or higher and lower than 100°C. When the temperature is kept at lower than 35°C, for example, 20°C, the softening point of the lignin in the alkali-treated product becomes higher than 160°C. In order to kept the alkali-treated product to 100°C or higher, there is a need to apply a pressure more than an ordinary pressure to the alkali-treated product, and high-pressure equipment is required, and thus it is preferable to kept at lower than 100°C in terms of the production cost. By keeping the alkali-treated product in the above temperature range, it is possible to adjust the softening point of the lignin contained in the alkali-treated product to 70°C or higher and 160°C or lower.

An adjustment range of the pH of the alkali-treated product in the step (b) is preferably 1 or higher and 7 or lower, more preferably 1 or higher and 5 or lower, and more preferably 1 or higher and 3 or lower. When the pH of the alkali-treated product is adjusted in the above range, a lignin is precipitated.

The pH adjustment of the alkali-treated product can be performed in accordance with a conventional method, and usually can be performed by repeating appropriate addition and mixing of an acid with an appropriate concentration while confirming the pH. An acid used for the pH adjustment of the present invention is not particularly limited, and examples thereof include methanesulfonic acid, p-toluenesulfonic acid, benzenesulfonic acid, trifluoromethanesulfonic acid, acetic acid, trifluoroacetic acid, trichloroacetic acid, hydrochloric acid, concentrated sulfuric acid, nitric acid, phosphoric acid and the like, and preferably acetic acid, trifluoroacetic acid, trichloroacetic acid, hydrochloric acid, nitric acid, phosphoric acid and the like.

With respect to the temperature adjustment and the pH adjustment of the alkali-treated product in the step (b), after the temperature is adjusted, the pH may be adjusted under the temperature condition, or the temperature adjustment and the pH adjustment may be performed simultaneously, but it is preferable that after the temperature is adjusted, the pH is adjusted under the temperature condition.

A time during which a lignin is precipitated is not particularly limited, and it is preferably 0.5 to 24 hours, more preferably 1 to 6 hours, and still more preferably 1 to 3 hours.

As a step before the step of adjusting the alkali-treated product to 35°C or higher and then adjusting the pH to 7 or lower, solid-liquid separation of the alkali-treated product may be performed, and the pH of the liquid fraction thus obtained may be adjusted to 7 or lower, thus precipitating a lignin with a softening point of 70°C or higher and 160°C or lower. In this case, when the temperature of the alkali-treated product becomes a temperature lower than 35°C during operation of the solid-liquid separation, there is a need to adjust the temperature to 35°C or higher again during pH adjustment.

A method for recovering the lignin precipitated in the step (b) is not particularly limited, and, for example, it is possible to recover the lignin to the solid component side by solid-liquid separation.

When solid-liquid separation is performed in the step (b), a method for solid-liquid separation is not particularly limited, and a method for filtration or centrifugation is preferable, and filtration and centrifugation may be used in combination. As a preferred aspect of filtration, filtration through a filter paper, filtration under reduced pressure, screw press, roller press, belt screen, vacuum dehydrator, filter press, belt press and the like are preferable, and filter press and screw press are more preferable. The above filtration methods may be used in combination.

In the case of filtration, a filter aid may be used. As the filter aid, diatomaceous earth, perlite, active carbon and the like can be used, and it is preferable to use diatomaceous earth, which is inexpensive. In the case of centrifugation, for example, centrifugation may be performed at 4,000 rpm for about 10 minutes.

When the lignin is recovered from the solid component after solid-liquid separation or the filter aid, it is possible to redissolve the lignin from the solid component or the filter aid using an organic solvent to recover. The organic solvent in which the lignin is redissolved is preferably methanol, ethanol, 1-propanol, 2-propanol, 1-butanol, 2-butanol, isobutyl alcohol, tert-butyl alcohol, 1-pentanol, 2-pentanol, 3-pentanol, 2-methyl-1-butanol, isopentyl alcohol, tert-pentyl alcohol, 3-methyl-2-butanol, neopentyl alcohol, tetrahydrofuran, 1,4-dioxane, diethyl ether, diisopropyl ether, methyl-tert-butyl ether, acetone, methyl ethyl ketone, methyl isobutyl ketone, methyl acetate, ethyl acetate, propyl acetate, isopropyl acetate, butyl acetate, isobutyl acetate, methyl acetate, methyl acetate, and methyl acetate, more preferably methanol, ethanol, tetrahydrofuran, 1,4-dioxane, acetone, methyl ethyl ketone, methyl acetate, and ethyl acetate, and still more preferably methanol, ethanol, tetrahydrofuran, acetone, and methyl ethyl ketone.

By redissolving the lignin from the solid component or the filter aid using an organic solvent, it becomes possible to remove ash, etc., from the lignin, and it is possible to obtain a high-purity lignin. As mentioned later, when a lignin is used as an additive to a resin composition, a high-purity lignin is preferable. Specifically, ash contained in the lignin is preferably 0.5% or loss, and the purity is preferably 75% or more.

With respect to measurement of the ash amount in the lignin, calculation is performed according to JIS K7120. In this case, as a thermomechanical analyzer, for example, the Simultaneous Thermogravimetric Analyzer (TG/DTA) STA7000 Series manufactured by Hitachi High-Technologies Corporation can be used.

The lignin obtained by the method of the present invention is characterized by a low softening point, and specifically, it is possible to obtain a lignin with a softening point of 70°C or higher and 160°C or lower, and preferably 90°C or higher and 160°C or lower. A lignin with a softening point of 70°C or higher and 160°C or lower is useful as an additive to a resin composition. When the softening point is higher than 160°C, due to too high heat melting property and fluidity, many burrs occur during molding after addition to a resin, resulting in great loss during production. On the other hand, when the softening point is lower than 70°C, the moldability of a resin deteriorates, unfavorably.

The softening point of the lignin is calculated according to JIS K7196. In this case, as a thermomechanical analyzer, for example, model TMA-50 manufactured by Shimadzu Corporation is used.

The lignin obtained by the method of the present invention is characterized by a higher number average molecular weight than that obtained by a conventional method, and specifically, it is possible to obtain a lignin with a number average molecular weight of 5,000 or more and 30,000 or less, more preferably 10,000 or more and 30,000 or less, and still more preferably 10,000 or more and 25,000 or less. For example, the number average molecular weight of the lignin obtained by a subcritical water treatment, which is one of the conventional methods, is 2,000 or less (JP 2014-193977 A), but by using the lignin of the present invention having a higher number average molecular weight as an additive to a resin composition, it is expected that the mechanical strength of the resin composition is improved and oil resistance, solvent resistance, and chemical resistance are improved.

In addition, the weight average molecular weight of the lignin obtained by the method of the present invention is preferably 10,000 or more and 60,000 or less, more preferably 20,000 or more and 60,000 or less, and still more preferably 25,000 or more and 55,000 or less.

The number average molecular weight and the weight average molecular weight of a lignin are calculated by the following method. A lignin to be measured is dissolved in an ammonia buffer (pH 11)/methanol (1/1 = v/v) to prepare a measurement sample. Next, measurement is performed by gel permeation chromatography (GPC system) connected to an organic general-purpose column. To the organic general-purpose column, "TSKgelGMPWXL (manufactured by Tosoh Corporation)" and "G2500PWXL (manufactured by Tosoh Corporation)" filled with a styrene-based polymer filler are series-connected before use. Subsequently, the measurement sample is injected into this GPC system, and ammonia buffer (pH 11)/methanol (1/1 = v/v) as an eluent is developed at 0.7 mL/min at 23°C. Then, the sample detection is performed at a wavelength of 254 nm utilizing ultraviolet absorbance (UV), and the retention time is measured. Subsequently, from the calibration curve showing the relationship between the retention time and the molecular weight of standard polyethylene glycol that was prepared separately, the molecular weight Mi and the number of molecules Ni of the lignin to be measured are calculated, and the number average molecular weight Mn and the weight average molecular weight Mw are calculated in accordance with the following formula 1 and formula 2.

$$Mn = \Sigma(Ni \cdot Mi)/\Sigma Ni \qquad \text{(Formula 1)}$$

$$Mw = \Sigma(Ni \cdot Mi \cdot Mi)/\Sigma(Ni \cdot Mi) \qquad \text{(Formula 2)}$$

The lignin of the present invention can be used as an additive to a thermosetting resin or a thermoplastic resin. Examples of the thermosetting resin can include a phenol resin including a novolak-type phenol resin, a melamine resin, an epoxy resin, an imide resin, a furan resin, a urethane resin, a urea resin, an unsaturated polyester resin and the like. Among these thermosetting resins, a phenol resin is preferable in terms of easy mixing with the lignin, etc. Examples of the thermoplastic resin can include a polyester-based resin, polyamide, polystyrene, an acrylic resin, cellulose acetate and the like. Among these thermoplastic resins, polyamide is preferable in terms of easy mixing with the lignin, etc.

A method for producing a resin composition containing the lignin of the present invention is as follows. A thermosetting resin containing the lignin of the present invention can be produced by adding the lignin of the present invention and a hardener to a thermosetting resin, and heating and kneading to make compatible. A thermoplastic resin containing the lignin of the present invention can be produced by adding the lignin of the present invention to a thermoplastic resin, and heating and kneading to make compatible. When heating and kneading are performed, it is appropriate to use a kneading machine such as a kneader, a triple-screw extruder, a twin-screw extruder, a single-screw extruder, a roll kneading machine, a segment mixer, and a planetary mixer.

When a phenol resin is used as the thermosetting resin, use of an amine-based hardener as a hardener enables enhanced moldability. Specifically, hexamethylenetetramine can be suitably used. A mixing ratio of hexamethylenetetramine is not particularly limited, and it is preferably 5 parts by mass or more and 25 parts by mass or less, and more preferably 7 parts by mass or more and 18 parts by mass or less based on 100 parts by mass of a resin mixture of a lignin resin and a novolak-type phenol resin. By setting the mixing ratio at the above lower limit or more, it is possible to obtain a minimum cross-link density. By setting the mixing ratio at the above upper limit or less, it is possible to reduce the amount of gas occurred during molding.

EXAMPLES

The present invention will be more specifically described by way of the following Examples.

<Reference Example 1> Measurement of Number Average Molecular Weight and Weight Average Molecular Weight of Lignin

A lignin to be measured was dissolved in an ammonia buffer (pH 11)/methanol (1/1 = v/v) to prepare a measurement sample. Next, to a GPC system "HLC-8320GPC (manufactured by Tosoh Corporation)", "TSKgelGMPWXL (manufactured by Tosoh Corporation)" and "G2500PWXL (manufactured by Tosoh Corporation)", which are organic general-purpose columns filled with a styrene-based polymer filler, were series-connected.

Into this GPC system, 200 μL of the measurement sample was injected, and ammonia buffer (pH 11)/methanol (1/1 = v/v) as an eluent was developed at 0.7 mL/min at 23°C. Then, the sample detection was performed at a wavelength of 254 nm utilizing ultraviolet absorbance (UV), and the retention time was measured. Subsequently, from the calibration curve showing the relationship between the retention time and the molecular weight of standard polyethylene glycol that was prepared separately, the molecular weight Mi and the number of molecules Ni of the lignin of the measurement sample were calculated, and the number average molecular weight Mn and the weight average molecular weight Mw were calculated in accordance with the above formula 1 and formula 2.

<Reference Example 2> Evaluation of Softening Point of Lignin

The lignin obtained was measured according to JIS K7196. As a thermomechanical analyzer, model TMA-50 manufactured by Shimadzu Corporation was used. The measurement limit of this analyzer is 180°C. When the softening point of the lignin obtained by the following lignin recovery test became 180°C, the value is expressed as higher than 180°C.

<Reference Example 3> Measurement of Moisture Content

The moisture contents of the lignin-containing biomasses used in Examples were measured. Using an infrared moisture meter FD-720 manufactured by Kett Electric Laboratory, the sample was kept at a temperature of 120°C, and a moisture content which is a value obtained from the difference between the stable value after evaporation and the initial value was measured. The moisture contents of a bagasse, a rice straw, and a cassava pulp which are the lignin-containing biomasses used in Examples are shown in Table 1.

[Table 1]

| Raw material | Moisture content (%) |
|---|---|
| Bagasse | 13.8 |
| Rice straw | 11.4 |
| Cassava pulp | 82.1 |

<Reference Example 4> Analysis of Ash

The ash amount in the lignin was calculated according to JIS K7120. As a thermomechanical analyzer, the Simultaneous Thermogravimetric Analyzer (TG/DTA) STA7000 Series manufactured by Hitachi High-Technologies Corporation was used. The heating temperature was 600°C.

<Reference Example 5> Analysis of Lignin Purity

A lignin to be measured was vacuum-dried at 60°C for 6 hours, and about 0.3 g was weighed into a beaker using a balance, and after addition of 3 mL of 72% sulfuric acid, the solution was allowed to stand for 1 hour while sometimes stirring at 30°C. This solution was completely transferred into a pressure bottle while mixing and diluting with 84 mL of pure water, followed by degradation by heating with an autoclave at 120°C for 1 hour. After degradation by heating, the degraded solution and the residue were separated through filtration. The residue thus obtained was dried at 105°C, and the weight was measured to calculate the degraded residue rate. Furthermore, the ash in the residue was measured and corrected by the method mentioned in Reference Example 4 to calculate the concentration of an acid-insoluble lignin. The degraded solution thus obtained was measured at a wavelength of 210 nm using an absorption spectrometer, and the concentration was calculated using the extinction coefficient ($110 L \cdot g^{-1} \cdot cm^{-1}$) of an acid-soluble lignin. The concentration obtained by adding the acid-insoluble lignin concentration to the acid-soluble lignin concentration was regarded as a lignin purity.
Device: GL-7400 HPLC system manufactured by GL Sciences Inc.

<Example 1>

First, 116 g of a bagasse and 2,000 g of distilled water were put into a 5 L three-necked recovery flask, followed by heating while stirring the content at 300 rpm. At the time when the internal temperature reached 100°C, 9 g of sodium hydroxide was added, followed by stirring at 300 rpm while maintaining the internal temperature at 100°C. After 2 hours, heating was stopped, and centrifugation was performed at 8,000 rpm to separate a liquid fraction, which was used as an alkali-treated product. The alkali-treated product was cooled to 40°C. Subsequently, while maintaining the alkali-treated product at 40°C, the pH was adjusted to 3 using 5 M hydrochloric acid. To the lignin precipitated, 10.0 g of diatomaceous earth was added, and separation from the neutralizing solution was performed using a filter paper. The mixture of the lignin and diatomaceous earth collected by filtration was put into a 1 L three-necked recovery flask, and after addition of 100 mL of acetone, the content was stirred under the conditions of room temperature and 300 rpm. After 1 hour, filtration was performed using a filter paper, and the filtrate was concentrated under reduced pressure, followed by drying to obtain 9.24 g of a lignin. Regarding the lignin thus obtained, the number average molecular weight and the weight average molecular weight were measured by the method of Reference Example 2, the softening point was measured by the method of Reference Example 3, the ash was measured by the method of Reference Example 4, and the purity was measured by the method of Reference Example 5. The measurement results showed that the number average molecular weight was 20,700, the weight average molecular weight was 42,200, the softening point was 108°C, the ash was 0.3%, and the purity was 80.5%. These results are shown in Table 2.

<Example 2>

In the same manner as in Example 1 except that the neutralization temperature was changed to 60°C in Example 1, 9.11 g of a lignin was obtained. Regarding the lignin thus obtained, the softening point was 101°C, the number average molecular weight was 17,100, the weight average molecular weight was 35,100, the ash was 0.3%, and the lignin purity was 81.6%. These results are shown in Table 2.

<Example 3>

In the same manner as in Example 1 except that the neutralization temperature was changed to 80°C in Example 1, 9.09 g of a lignin was obtained. Regarding the lignin thus obtained, the softening point was 105°C, the number average molecular weight was 15,200, the weight average molecular weight was 31,200, the ash was 0.3%, and the lignin purity was 80.8%. These results are shown in Table 2.

<Example 4>

In the same manner as in Example 1 except that the neutralization temperature was changed to 100°C in Example 1,9.10 g of a lignin was obtained. Regarding the lignin thus obtained, the softening point was 107°C, the number average molecular weight was 13,800, the weight average molecular weight was 26,900, the ash was 0.4%, and the lignin purity was 81.5%. These results are shown in Table 2.

<Example 5>

In the same manner as in Example 1 except that the lignin-containing biomass was changed to 113 g of a rice straw in Example 1, 8.22 g of a lignin was obtained. Regarding the lignin thus obtained, the softening point was 157°C, the number average molecular weight was 21,000, the ash was 0.4%, and the lignin purity was 78.8%. From this result, even when a rice straw was used as the lignin-containing biomass, it was possible to recover a lignin with a softening point of 160°C or lower. These results are shown in Table 2.

<Example 6>

In the same manner as in Example 1 except that the concentration of sodium hydroxide was changed to 3 g in Example 1, 6.39 g of a lignin was obtained. From this result, it was found that even when the concentration of sodium hydroxide is changed to 3 g, it is possible to recover a sufficient amount of a lignin.

<Example 7>

In the same manner as in Example 1 except that the concentration of sodium hydroxide was changed to 6 g in Example 1, 8.11 g of a lignin was obtained. From this result, it was found that even when the concentration of sodium hydroxide is changed to 6 g, it is possible to recover a sufficient amount of a lignin.

<Example 8>

In the same manner as in Example 1 except that the concentration of sodium hydroxide was changed to 12 g in Example 1, 9.67 g of a lignin was obtained. From this result, it was found that even when the concentration of sodium hydroxide is changed to 12 g, it is possible to recover a sufficient amount of a lignin.

<Example 9>

In the same manner as in Example 1 except that the concentration of sodium hydroxide was changed to 15 g in Example 1, 9.82 g of a lignin was obtained. From this result, it was found that even when the concentration of sodium hydroxide is changed to 15 g, it is possible to recover a sufficient amount of a lignin.

<Example 10>

In the same manner as in Example 1 except that the alkali treatment temperature was changed to 40°C in Example 1, 6.60 g of a lignin was obtained. From this result, it was found that it is possible to recover a sufficient amount of a lignin even under the condition of a low alkali treatment temperature.

<Example 11>

In the same manner as in Example 1 except that the alkali treatment temperature was changed to 60°C in Example 1, 8.31 g of a lignin was obtained. From this result, it was found that it is possible to recover a sufficient amount of a lignin even under the condition of a low alkali treatment temperature.

<Example 12>

In the same manner as in Example 1 except that sodium hydroxide was changed to potassium hydroxide and the amount of the alkali added was changed to 12.6 g in Example 1, 9.31 g of a lignin was obtained. From this result, it was found that even when the alkali used in the alkali treatment is changed to potassium hydroxide, it is possible to recover a sufficient amount of a lignin.

<Example 13>

In the same manner as in Example 1 except that sodium hydroxide was changed to sodium carbonate and the amount of the alkali added was changed to 23.9 g in Example 1, 3.59 g of a lignin was obtained. From this result, it was found that even when the alkali used in the alkali treatment is changed to sodium carbonate, it is possible to recover a sufficient amount of a lignin.

<Example 14>

In the same manner as in Example 1 except that the pH after neutralization was changed to 7 in Example 1, 3.12 g of a lignin was obtained. From this result, it was found that even when the pH after neutralization is changed to 7, it is possible to recover a sufficient amount of a lignin.

<Example 15>

In the same manner as in Example 1 except that the lignin-containing biomass was changed to 814 g of a cassava pulp and the amount of distilled water used was changed to 1,345 g, 6.23 g of a lignin was obtained. Regarding the lignin thus obtained, the softening point was 134°C, the number average molecular weight was 18,600, the ash was 0.3%, and the lignin purity was 80.5%. From this result, even when a cassava pulp was used as the lignin-containing biomass, it was possible to recover a lignin with a softening point of 160°C or lower. These results are shown in Table 2.

<Comparative Example 1>

In the same manner as in Example 1 except that the neutralization temperature was changed to 20°C in Example 1, 9.52 g of a lignin was obtained. Regarding the lignin thus obtained, the softening point was higher than 180°C and could not be measured. The number average molecular weight was 42,800, the weight average molecular weight was 84,900, the ash was 0.3%, and the lignin purity was 80.5%. These results are shown in Table 2.

[Table 2]

| | Lignin-containing biomass | Neutralization temperature (°C) | Yield (g) | Softening point (°C) | Number average molecular weight | Weight average molecular weight | Ash (%) | Lignin purity (%) |
|---|---|---|---|---|---|---|---|---|
| Example 1 | Bagasse | 40 | 9.24 | 108 | 20,700 | 42,200 | 0.3 | 80.5 |
| Example 2 | Bagasse | 60 | 9.11 | 101 | 17,100 | 35,100 | 0.3 | 81.6 |
| Example 3 | Bagasse | 80 | 9.09 | 105 | 15,200 | 31,200 | 0.3 | 80.8 |
| Example 4 | Bagasse | 100 | 9.10 | 107 | 13,800 | 26,900 | 0.4 | 81.5 |
| Example 5 | Rice straw | 40 | 8.22 | 157 | 21,000 | 40,300 | 0.4 | 78.8 |
| Example 15 | Cassava pulp | 40 | 6.23 | 134 | 18,600 | 34,100 | 0.4 | 81.1 |
| Comparative Example 1 | Bagasse | 20 | 9.52 | > 180 | 42,800 | 84,900 | 0.3 | 80.5 |

INDUSTRIAL APPLICABILITY

According to the present invention, it is possible to provide a method for simply producing a lignin with a low softening point. By adding the lignin produced to a thermosetting resin such as a phenol-based resin and a thermoplastic resin, it can be expected to produce an environment-conscious resin.

**Claims**

1.  A method for producing a lignin, the method comprising:

    (a) a step of obtaining an alkali-treated product by an alkali treatment in which a lignin-containing biomass is brought into contact with an alkaline aqueous solution; and
    (b) a step of adjusting a temperature and a pH of the alkali-treated product to 35°C or higher and pH 7 or lower, respectively, to precipitate a lignin, and recovering the lignin.

2.  The method for producing a lignin according to claim 1, wherein, in the step (b), the temperature of the alkali-treated product is adjusted to 35°C or higher, and then the pH of the alkali-treated product is adjusted to 7 or lower under the temperature condition.

3.  The method for producing a lignin according to claim 1 or 2, wherein the lignin precipitated in the step (b) is recovered to the solid component side by solid-liquid separation.

4.  The method for producing a lignin according to claim 3, wherein the lignin recovered to the solid component side is dissolved in an organic solvent and recovered.

5.  The method for producing a lignin according to claim 3 or 4, wherein the solid-liquid separation uses a filter aid.

6.  The method for producing a lignin according to any one of claims 1 to 5, wherein the lignin-containing biomass is a bagasse, a rice straw, or a cassava pulp.

7.  The method for producing a lignin according to any one of claims 1 to 6, wherein the temperature condition of the alkali treatment in the step (a) is in a range of 60°C or higher and lower than 100°C.

8.  A lignin, having a softening point of 70°C or higher and 160°C or lower and a number average molecular weight of 5,000 or more and 30,000 or less.

9.  A resin composition, comprising the lignin according to claim 8.

## INTERNATIONAL SEARCH REPORT

| International application No. |
|---|
| PCT/JP2018/028406 |

A. CLASSIFICATION OF SUBJECT MATTER
Int.Cl. C08H7/00(2011.01)i, C08L97/00(2006.01)i

According to International Patent Classification (IPC) or to both national classification and IPC

B. FIELDS SEARCHED

Minimum documentation searched (classification system followed by classification symbols)
Int.Cl. C08H7/00, C08L97/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 2014-208803 A (ROISU.COM KK) 06 November 2014, claims, paragraph [0019], examples (Family: none) | 1-3, 6-9<br>4-5 |
| X<br>A | WO 2015/056758 A1 (SUMITOMO BAKELITE CO.) 23 April 2015, claims<br>& EP 3059274 A1, claims | 8-9<br>1-7 |
| A | JP 2001-503113 A (GRANIT S.A.) 06 March 2001, claims, examples<br>& US 6239198 B1, claims, examples & WO 1998/042912 A1 | 1-9 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 14.08.2018 | 21.08.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2018/028406 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2012-236811 A (KONO SHINSOZAI KAIHATSU KK) 06 December 2012, claims, examples (Family: none) | 1-9 |
| A | JP 2013-531747 A (STORA ENSO OYJ) 08 August 2013, claims, examples & US 2013/0131326 A1, claims, examples & WO 2012/005677 A1 & CA 2804186 A1 & CN 103080417 A | 1-9 |
| A | JP 2016-108392 A (FORESTRY & FOREST PRODUCTS RESE ARCH INSTITUTE) 20 June 2016, paragraph [0079] (Family: none) | 1-9 |

Form PCT/ISA/210 (continuation of second sheet) (January 2015)

**EP 3 663 330 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012082255 A
- JP 2014193977 A
- JP 2012214432 A
- JP 2011057997 A